# EUROPÄISCHE PATENTSCHRIFT

(11) **EP 2 739 848 B1**
(45) Veröffentlichungstag und Bekanntmachung des Hinweises auf die Patenterteilung: **13.07.2016**
(21) Anmeldenummer: 12745451.0
(22) Anmeldetag: 31.07.2012
(51) Int. Cl.: F03D 80/00

(54) **ARRETIERUNGSVORRICHTUNG FÜR WINDTURBINEN**
LOCKING DEVICE FOR WIND TURBINES
DISPOSITIF D'ARRÊT POUR TURBINES ÉOLIENNES

(30) Priorität: 01.08.2011 DE 102011080228
(43) Veröffentlichungstag der Anmeldung: 11.06.2014
(73) Patentinhaber: Suzlon Energy GmbH, 18057 Rostock (DE)
(72) Erfinder: FRITZSCHE, Mario, 14471 Potsdam (DE); SCHORER, Frank, 14482 Potsdam (DE)
(86) Internationale Anmeldenummer: PCT/EP2012/064934
(87) Internationale Veröffentlichungsnummer: WO 2013/017587

(56) Entgegenhaltungen:
- DE-A1-102007 058 746
- DE-U1-202007 018 565
- US-A1- 2011 135 481

## Beschreibung

Die Erfindung betrifft eine Arretierungsvorrichtung für den Rotor einer Windturbine mit einem oder mehreren Rotorblättern der sich um eine im Wesentlichen horizontal verlaufende Rotorachse unter Beaufschlagung durch Wind dreht. Die Rotorachse ist in einem Maschinenhaus auf einem Maschinenträger gelagert und überträgt ihre Rotation entweder direkt oder über ein zwischengeschaltetes Getriebe auf einen Generator, der die Rotation in elektrische Energie umwandelt. Das Maschinenhaus befindet sich seinerseits auf einem Turm mit welchem es über ein so genanntes Azimutlager verbunden ist. Das Azimutlager ermöglicht die Drehung des Maschinenhauses um eine weitere im Wesentlichen vertikale Achse und somit die Ausrichtung des Rotors gemäß der jeweiligen Windrichtung.

Aus Sicherheitsgründen ist es zwingend erforderlich, dass der Rotor - und damit sämtliche rotierenden Teile - gegenüber dem Maschinenhaus über eine formschlüssige Verbindung gegen weitere Drehung festgelegt werden können. Diese Festlegung erfolgt zum Beispiel dann, wenn Arbeiten innerhalb der Nabe des Rotors oder des Maschinenhauses durchgeführt werden und dient dazu, Gefahren für die beteiligten Personen zu minimieren. Eine solche formschlüssige Verbindung wird üblicherweise dadurch hergestellt, dass an der Rotorachse eine Arretierungsscheibe drehfest angebracht wird. Diese Arretierungsscheibe weist eine oder mehrere Durchbrechungen auf. Am Maschinenträger oder einem anderen festen Bauteil im Maschinenhaus befindet sich ein verschieblicher Bolzen, der in einer ausgeschobenen Stellung (Schließstellung) eine der Durchbrechungen der Arretierungsscheibe durchgreift und somit eine formschlüssige, drehfeste Verbindung herstellt. Da bei Festlegung des Rotors durch Wind und andere äußere Einflüsse große Kräfte auf die Verbindung einwirken, haben Bolzen und Durchbrechung vorzugsweise zueinander angeglichene Querschnitte, um die auftretenden Kräfte möglichst gleichmäßig und über eine große Fläche aufnehmen zu können. In der eingeschobenen Stellung (Offenstellung) gibt der Bolzen die Durchbrechung der Arretierungsscheibe frei und ermöglicht eine ungehinderte Drehung des Rotors.

Eine derartige Arretierungsvorrichtung ist unter anderem aus DE 10 2004 013 624 A1 und DE 10 2007 058 746 A1 bekannt.

DE 10 2004 013 624 A1 beschreibt dabei ein Verfahren, den Rotor in einer solchen Drehstellung anzuhalten, in welcher die Durchbrechung sich in einer Lage im Raum befindet, in der der Bolzen bei seiner Verschiebung die Durchbrechung durchgreifen kann. Hierzu wird auf der Arretierungsscheibe eine Markierung angebracht, welche mittels eines Positionsgebers erfasst wird.

DE 10 2007 058 746 A1 beschreibt ebenfalls ein Verfahren zur Ermittlung der Position des Rotors, um den Eingriff des Bolzens in eine Durchbrechung zu ermöglichen und schlägt hierzu den Einsatz von Sensoren vor, die die Drehgeschwindigkeit der Rotorwelle erfassen.

Den bekannten Lösungen ist gemeinsam, dass sie vorschlagen, den Rotor in einer bestimmten Position anzuhalten, in der Durchbrechung und Bolzen miteinander fluchten, so dass der Bolzen in die Durchbrechung eingreifen kann. Um eine möglichst leistungsfähige Kraftübertragung sowie eine sichere und spielfreie Festlegung des Rotors gegenüber dem Maschinenhaus zu gewährleisten, sind Bolzen und Durchbrechung der Arretierungsscheibe in ihren jeweiligen Querschnittsformen und -abmessungen weitestgehend übereinstimmend gestaltet und so anzuordnen, dass die Querschnittsformen die gleiche Orientierung aufweisen. Weichen die Querschnittsformen voneinander ab, so erfolgt die Kraftübertragung nur punktuell, was zu einer erhöhten Belastung der Bauteile, insbesondere im Bereich des jeweiligen Kraftangriffs, aber über den Spannungsverlauf auch darüber hinaus, und in der Folge zu verminderter Haltbarkeit oder erhöhten Anforderungen an Material, Dimensionierung und Verarbeitung und damit erhöhten Kosten, führt.

Gleiches gilt für Unterschiede in den Querschnitssabmessungen. Ist der Bolzen kleiner als die Durchbrechung, so findet die Kraftübertragung ebenfalls nur punktuell statt, mit den oben beschriebenen Folgen. Darüber hinaus tritt zwischen beiden Bauteilen Spiel auf, weshalb in diesem Fall der Rotor sich - wenn auch in geringem Maße - bewegen kann. Diese Bewegung ist aus zweierlei Gründen unerwünscht. Zum einen stellt jede Bewegung des Rotors eine Gefahr für im Maschinenhaus befindliche Personen dar, zum anderen tritt in diesem Fall die aus der Drehung des Rotors auf den Bolzen einwirkende Kraft nicht gleichförmig, sondern stoßartig auf. Derartige Stöße und Schläge stellen deutliche höhere Anforderungen an den Bolzen, ebenfalls mit den oben beschriebenen Folgen.

Aus diesen Gründen weisen Bolzen und Durchbrechung idealerweise übereinstimmende Querschnittsformen und -abmessungen sowie -orientierung auf. Aus Gründen der einfacheren Herstellung sowie der weitgehenden Lageunabhängigkeit hat hierfür die Querschnittsform des Kreises Verbreitung gefunden.

Ein Nachteil aus dem Stand der Technik bestehet darin, dass in der Praxis ist die dargestellte vollständige Übereinstimmung nicht zu erreichen und auch nicht sinnvoll ist. Allein die Abweichungen bei der Herstellung von den Soll- oder Nennmaßen verhindern die vollständige Übereinstimmung. Diese Abweichungen auszuschließen, oder zumindest auf ein außergewöhnlich geringes Maß zu reduzieren, führt zu unverhältnismäßig hohem Aufwand. Sollte dennoch eine vollständige Überstimmung gelingen, so würde diese das Einschieben des Bolzens in die Durchbrechung erschweren, da sämtliche Oberflächen vollständig aneinander anliegen und somit Reibungskräfte auftreten als auch jede noch so geringe Winkelabweichung von der idealen Einschubrichtung ein Verklemmen und Verkeilen zur Folge hätte.

US 2011/135481 A1 beschreibt eine Rotorarretierungsvorrichtung mit Bolzen und Scheibe, in welcher das Bolzengehäuse radial und tangential verschieblich verschraubt werden kann.

Eine Aufgabe der Erfindung ist es, eine Arretierungsvorrichtung bereit zu stellen, welche die Nachteile des Stands der Technik vermeidet, und insbesondere ein zuverlässiges und weitgehend ungehindertes Einschieben des Bolzens in die Durchbrechungen der Scheibe gewährleistet, wobei Spiel zwischen Bolzen und Durchbrechung reduziert wird.

Diese Aufgabe wird durch eine Arretierungsvorrichtung nach Anspruch 1 gelöst, indem Einstellmittel wirksam in Radialrichtung zwischen dem Arretierungsbolzen und der Rotorachse vorgesehen sind, wodurch der Abstand des Arretierungsbolzens gegenüber der Rotorwelle mindestens in Radialrichtung einstellbar ist. Es hat sich nämlich überraschender Weise gezeigt, dass der Eingriff und die Fluchtung zwischen Arretierungsbolzen und Durchbrechungen nämlich eben gerade nicht nur von der jeweiligen Drehposition des Rotors abhängig sind. Tatsächlich bestehen weitere Einflussfaktoren, welche bestimmen, ob der Eingriff des Bolzens in die Durchbrechung gelingt: Basierend auf Herstellungs- und Montagetoleranzen der einzelnen Komponenten der Windturbine treten Abweichungen radialen im Abstand zwischen Mittelachse des Arretierungsbolzen und der Achse der Rotorwelle auf. Diese mehrfachen Abweichungen aus verschiedenen Quellen können in der Herstellung nicht oder nur mit unverhältnismäßigen hohem Aufwand ausgeglichen oder vermieden werden. Die Lehre der Erfindung ermöglicht nun erstmalig, dass während der Montage oder im Zuge einer Wartung, der radiale Abstand zwischen Arretierungsbolzen und Rotorwelle einstellbar ist, und ergo die radiale Komponente der Fluchtung zwischen Arretierungsbolzen und Durchbrechung optimiert werden kann. Bevorzugte Ausführungsformen sind in den Unteransprüchen offenbart.

Dabei werden diejenigen Abweichungen ausgeglichen, welche unvermeidlich und unerwünscht sind. Es handelt sich dabei um diejenige Abweichung der Fluchtung zwischen der Mittelachse des Bolzens bzw. dessen Verschieberichtung sowie der Durchbrechungen in der an der Rotorachse befindlichen Arretierungsscheibe. Diese Abweichungen können in zwei Richtungen, jeweils im Wesentlichen rechtwinklig zur Mittelachse der Rotorwelle, auftreten. Die im Folgenden verwendeten Angaben einer Axialrichtung, Radialrichtung, Umfangsrichtung und Angaben zu Oben und Unten gelten bezügliche der Rotationsachse des Rotors der Windturbine. Zudem wird diejenige Richtung, welche im Wesentlichen rechtwinklig zur Mittelachse der Rotorwelle und in einer Ebene mit der Achse des Turms verläuft als vertikal, diejenige Richtung, welche im Wesentlichen rechtwinklig zur Mittelachse der Rotorwelle und im Wesentlichen rechtwinklig zur Achse des Turms verläuft als horizontal bezeichnet werden.

In einer bevorzugten Ausführungsform ist der Bolzen zylinderförmig gestaltet und ist entsprechend in einer hohlzylindrischen Aufnahme des Gehäuses angeordnet. Die äußere Form des Gehäuses ist ebenfalls rotationssymmetrisch, vorzugsweise zylindrisch, geformt, wobei die Mittelachsen der Rotationssymmetrie der äußeren Form und der Mittelachse der Ausnehmung des Gehäuses um einen bestimmten Betrag gegeneinander versetzt sind. Der Arretierungsbolzen ist somit exzentrisch in dem Gehäuse gelagert. Das Gehäuse ist wiederum derart am Maschinenträger befestigt, das eine Drehung des Gehäuses um seine Rotationsachse möglich ist und das Gehäuse in einer gewünschten Drehstellung festlegbar ist. Durch die Drehung des Gehäuses wird die Achse des Bolzens sowohl horizontal als auch vertikal und damit zur Mittelachse der Rotorwelle verlagert im Wesentlichen Für jede Stellung können dabei in einer Richtung zwei Stellungen in der anderen, dazu rechtwinkligen, Richtung eingestellt werden können. Die zwangsläufige Verlagerung in der anderen, rechtwinklig zur beabsichtigten Einstellrichtung verlaufenden Richtung ist dabei ohne weitere Auswirkungen, da diese durch die Rotationsbewegung der Arretierungsscheibe kompensiert wird. Auf diese Weise kann eine räumlich übereinstimmende Anordnung von Bolzen und Durchbrechung erreicht werden und der Anstand zwischen Arretierungsscheibe und Rotorwelle in Radialrichtung ist einstellbar.

Diese Ausführungsform weist den weiteren Vorteil auf, dass die Verlagerung des Arretierungsbolzens jederzeit ohne großen Aufwand erneut vorgenommen werden kann. Dies kann erforderlich werden, wenn im laufenden Betrieb Verformungen oder Lageänderungen einzelner Bauteile aufgetreten sind.

In einer weiteren Ausführungsform ist zwischen dem Bolzengehäuse und dem Maschinenträger mindestens ein Distanzelement in verschiedenen Abmessungen anordenbar, welche den Abstand zum Maschinenträger und damit die Lage der Bolzenachse im Raum beeinflussen.

Beiden Ausführungsformen ist gemein, dass die Einstellung nicht nur einmalig bei der erstmaligen Montage erfolgen kann, sondern auch später noch erneute Einstellungen vorgenommen werden können, z.B. wenn es in Folge von Belastungen im Betrieb zu Formänderungen der Bauteile gekommen ist. Dabei weist die zuerst beschriebene Ausführungsform den Vorteil auf, dass die Verstellung ohne zusätzliche Teile erfolgen kann, wohingegen die zuletzt beschriebene Ausführungsform es voraussetzt, dass passende Distanzelemente mitgeführt werden.

Gegenstand der Erfindung ist weiterhin eine Windturbine mit einer in beschriebener Weise verstellbaren Arretierungsvorrichtung.

Weitere Einzelheiten der Erfindung gehen aus den Zeichnungen anhand der Beschreibung hervor.

In den Zeichnungen zeigt
- Fig. 1: eine perspektivische Ansicht eines Maschinenträgers und einer an der Rotorwelle angebrachten Arretierungsscheibe,
- Fig. 2: eine axiale Aufsicht auf die an der Rotorwelle angebrachten Arretierungsscheibe,
- Fig. 3: eine schematische Darstellung der Arretierungsvorrichtung,
- Fig. 4: eine Seitenansicht von Maschinenträger, Arretierungsscheibe und Rotornabe mit einem Schnitt durch die Arretierungsvorrichtung,
- Fig. 5: einen vergrößerten Schnitt durch die Arretierungsvorrichtung,
- Fig. 6: eine schematische Darstellung des Querschnitts der Arretierungsvorrichtung,
- Fig. 7: eine Explosionszeichnung von Maschinenträger, Rotorwelle mit Rotorwellenlagerung und Arretierungsvorrichtung, und
- Fig. 8: eine Windturbine mit einer Arretierungsvorrichtung.

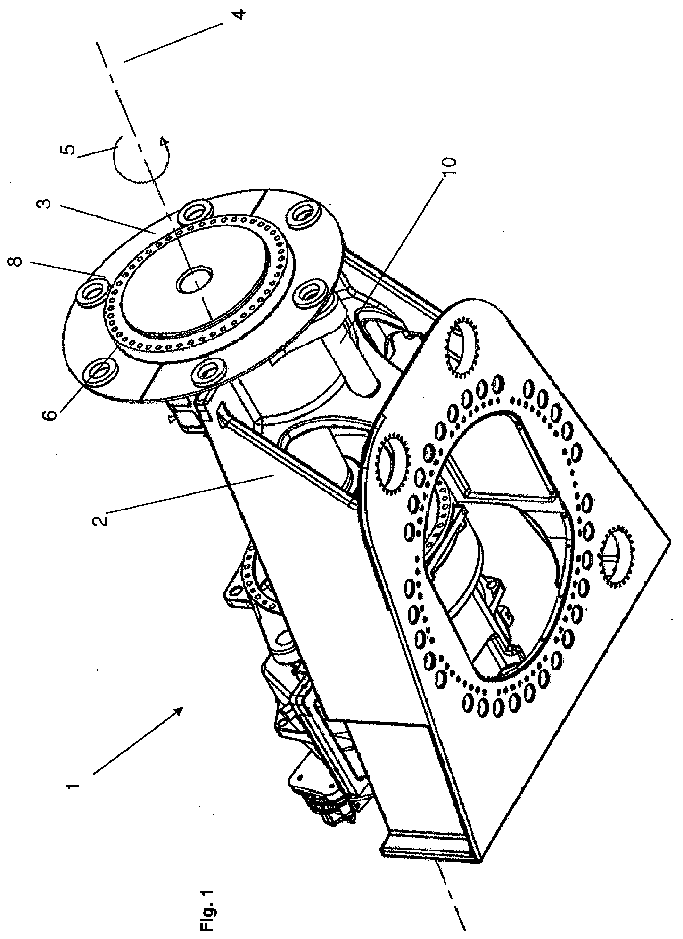

Fig. 1 ist die Anordnung der wesentlichen Teile der Arretierungsvorrichtung 1 zu entnehmen. Der Maschinenträger 2 ist drehbar mit dem oberen Ende eines Turms 32 verbunden. Am Maschinenträger 2 ist die Rotorwelle 3 gelagert, die sich um ihre Längsachse 4 rotierend in Richtung des Drehpfeils 5' bewegen kann. Die Rotation der Rotorwelle 3 wird von einer hier nicht dargestellten, in der Ansicht rechts anschließenden Rotornabe 14 eingetragen. An der Rotorwelle 3 ist eine Arretierungsscheibe 6 derart angebracht.

Die Arretierungsscheibe 6 ist vorliegend zweistückig ausgeführt, es ist aber auch möglich, die Arretierungsscheibe 6 ein- oder mehrstückig auszuführen. Die Arretierungsscheibe 6 weist mehrere Durchbrechungen 7 auf. Diese Durchbrechungen 7 sind so ausgebildet, dass der hier nicht sichtbare Arretierungsbolzen 10 in die Durchbrechungen 7 eingreifen kann so dass keine Drehbewegung um die Längsachse 4 der Rotorwelle 3 zwischen der Arretierungsscheibe 6 und der Rotorwelle 3 stattfinden kann. Die Durchbrechungen 7 sind zur höheren Festigkeit und besseren Eingriff des Arretierungsbolzens 10 mit Buchsen 9 ausgestattet.

Unterhalb der Rotorwelle 3 ist das Gehäuse 10 der Arretierungsvorrichtung 1 angeordnet, in dem sich der Arretierungsbolzen 11 befindet.

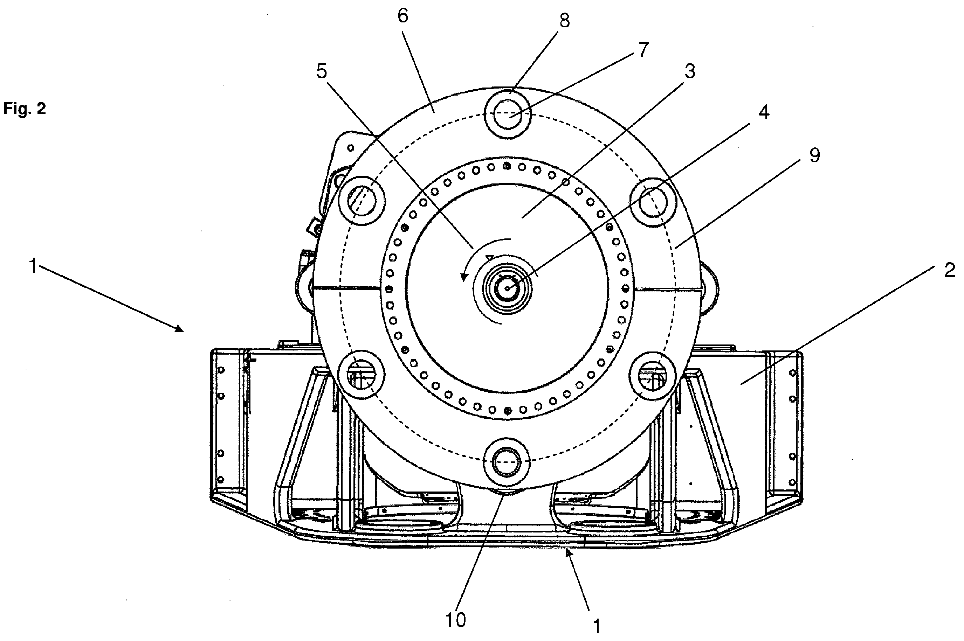

Fig. 2 zeigt eine Aufsicht auf die Arretierungsvorrichtung 1 aus Blickrichtung der Rotornabe 14. Hier ist zu erkennen, dass die mehreren Durchbrechungen 7 in der Arretierungsscheibe 6 auf einer Kreislinie 9 mit der Längsachse 4 der Rotorwelle 3 als Mittelpunkt liegen. Weiter ist zu erkennen, dass der Arretierungsbolzen 11, der im Gehäuse 10 geführt wird, mit einer der Durchbrechungen 7 fluchtet.

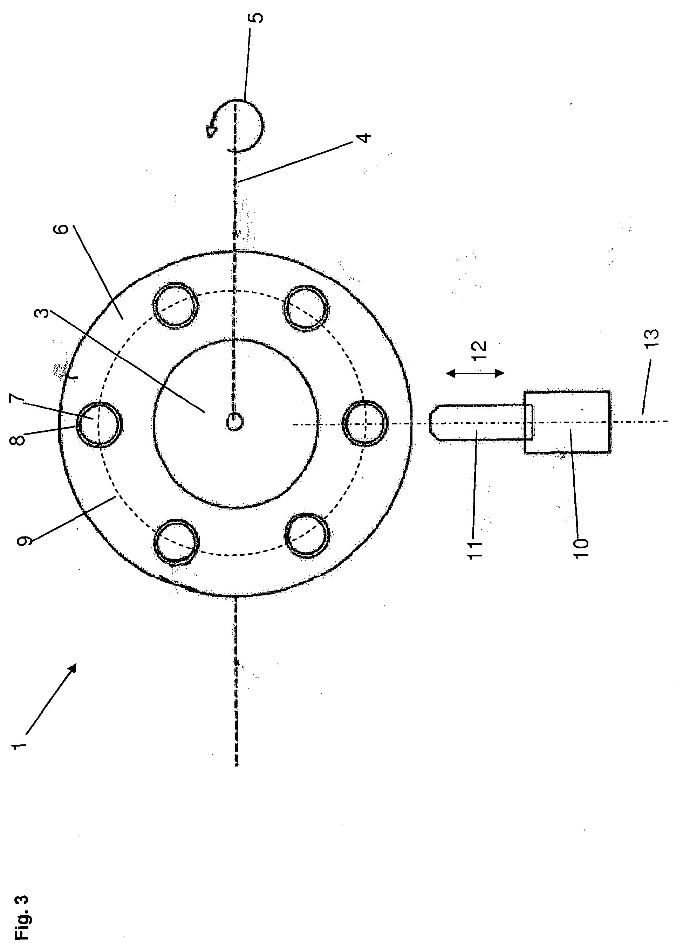

Fig. 3 zeigt eine schematische Darstellung des Zusammenwirkens der einzelnen Teile der Arretierungsvorrichtung 1. Der im Gehäuse 10 gelagerte Arretierungsbolzen 11 ist in Axialrichtung 12, bzw. geradlinig in Richtung des Doppelpfeiles 12 verlagerbar. In seiner ausgeschobenen, durchgreift der Arretierungsbolzen 11 eine der Durchbrechungen 7 der Arretierungsscheibe 6 und stellt somit eine formschlüssige Verbindung her, die eine weitere Rotationsbewegung der Arretierungsscheibe 6 und der damit drehfest verbundene Rotorwelle 3 um deren Längsachse 4 verhindert.

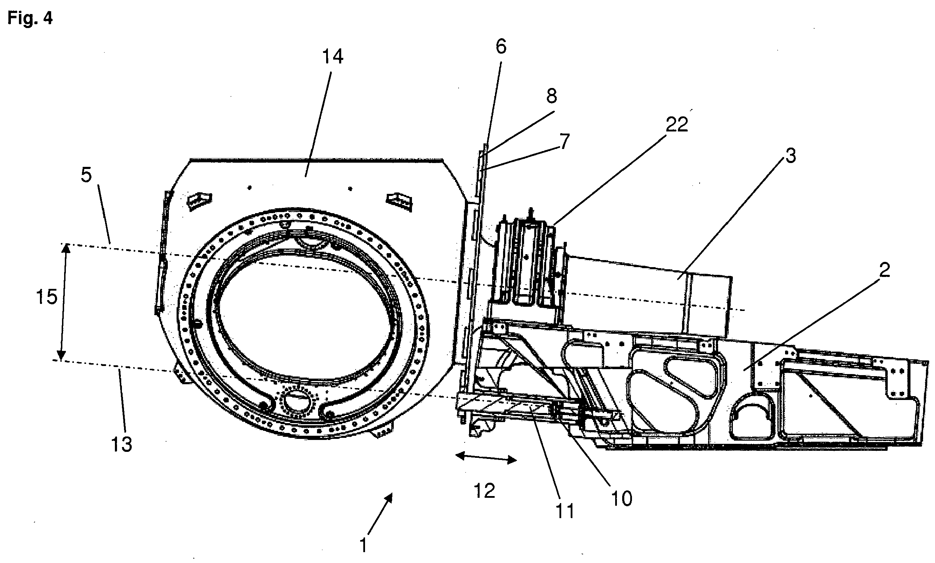

Fig. 4 zeigt das Zusammenwirken der Bauteile der Arretierungsvorrichtung 1. Auf dem Maschinenträger 2 ist die Rotorwelle 3 gelagert. An der Rotorwelle 3 ist drehfest die Arretierungsscheibe 6 angeordnet. In der vorliegenden Ansicht links schließt sich an die Rotorwelle 3 die Nabe 14 des Rotors an. Auf der der Rotornabe 14 gegenüberliegenden, in der Ansicht rechten Seite, schließen sich weitere, hier nicht dargestellte Baugruppen, z.B. Getriebe und Generator an. Diese Komponenten bilden den Triebstrang 27 der Windturbine 31. Unterstrichen sei, dass diese Erfindung auch Typen von Windturbinen umfasst, die kein Getriebe und/oder eine andere Lagerung aufweisen.

Auf der Unterseite des Maschinenträgers 2 ist das Gehäuse 10 angeordnet, in dem der Arretierungsbolzen 11 verschieblich in Richtung des Doppelpfeils 12 gelagert ist. Zwischen der Längsachse 4 der Rotorwelle 3 und der Mittelachse 14 des Arretierungsbolzens 11 besteht der Abstand 15.

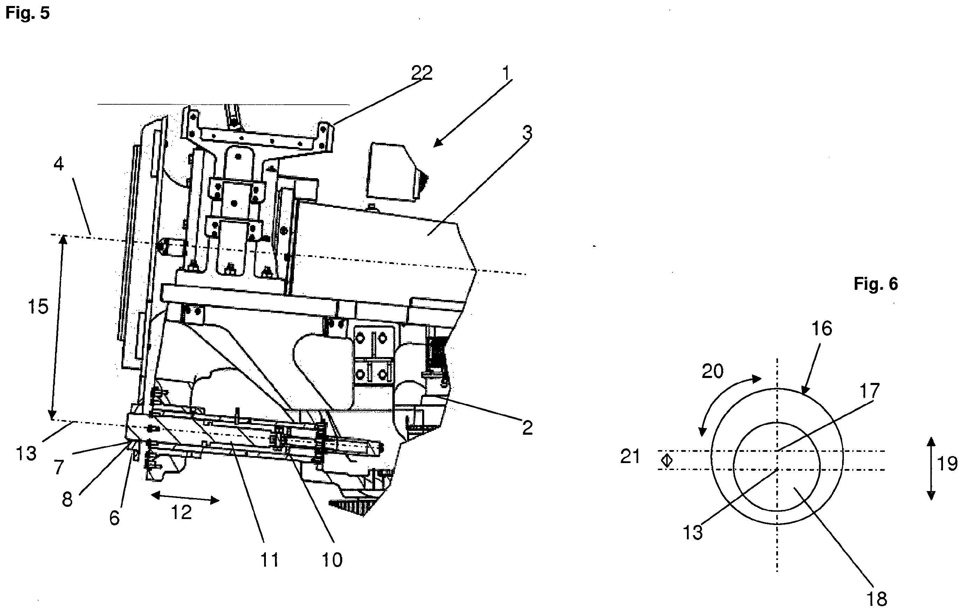

Fig. 5 zeigt einen vergrößerten Schnitt durch das Gehäuse 10 und den Arretierungsbolzen 11, wobei sich der Arretierungsbolzen 11 in seiner ausgeschobenen, in der Ansicht linken, Stellung befindet. Zu erkennen ist, wie der Arretierungsbolzen 11 die Durchbrechung 7 und die Buchse 8 in der Arretierungsscheibe 6 durchgreift und somit den Formschluss herstellt. Weiterhin ist der Abstand 15 zwischen der Längsachse 4 der Rotorwelle 3 und der Mittelachse 14 des Arretierungsbolzens 11 zu erkennen.

Die Positionen der Durchbrechungen 7 in der Arretierungsscheibe 6 werden durch die Herstellung dauerhaft festgelegt, so dass ein Ausgleich zwischen der Position der Durchbrechungen 7 und dem Arretierungsbolzen 11 durch eine Veränderung des Abstands 15 zwischen Längsachse 4 der Rotorwelle 3 und der Mittelachse 14 des Arretierungsbolzen 11 herbeigeführt werden muss.

In Fig. 6 ist in schematischer Darstellung eine bevorzugte Ausführungsform dargestellt, mittels derer der Abstand 15 veränderbar ist. Dadurch ist die Mittelachse 13 des Arretierungsbolzens 11 mit den Durchbrechungen 7 fluchtend ausrichtbar. Dargestellt ist ein Querschnitt durch Gehäuse 10 und Arretierungsbolzen 11. Das Gehäuse 10 weist an seiner Außenseite einen rotationssymmetrischen Querschnitt 16 um eine Mittelachse 17 auf. In seiner dreidimensionalen Ausgestaltung stellt sich das Gehäuse 10 somit im Wesentlichen als Zylinder dar. Im Querschnitt des Gehäuses 10 befindet sich eine in ihrem Querschnitt ebenfalls rotationssymmetrische Aufnahme 18 zur Aufnahme des Arretierungsbolzens 11 auf. Die Aufnahme 18 bildet somit einen im Wesentlichen zylindrischen Hohlraum innerhalb des Gehäuses 10. Dabei entspricht die Mittelachse der Aufnahme 18 der Mittelachse 13 des Arretierungsbolzens 11 und ist gegenüber derjenigen Mittelachse 17 des Gehäusequerschnitts 16 versetzt, so dass sich ein Exzenter mit der Exzentrizität 21 bildet. Wird das Gehäuse 10 in Richtung des Doppelpfeiles 20 um seine Mittelachse 17 gedreht bewirkt dies eine Verlagerung der Aufnahme 18 und damit des Arretierungsbolzens 11. Auf diese Weise ist eine Fluchtung zwischen dem Arretierungsbolzen 11 und den Durchbrechungen 7 in der Arretierungsscheibe 6 herstellbar. Dabei ist zu beachten, dass innerhalb des Gehäuses 10 nur die Verlagerung 19 des Arretierungsbolzens 11 in vertikaler Richtung von Bedeutung ist. Eine Verlagerung in horizontaler Richtung ist nicht erforderlich und auch unbeachtlich, da diese durch die Rotationsbewegung der Arretierungsscheibe 6 um die Längsachse 4 der Rotorwelle 3 erfolgt.

Das Gehäuse 9 wird nach erfolgter Einstellung gegen eine erneute, unbeabsichtigte Drehung festgelegt. Die Festlegung ist hier nicht dargestellt und erfolgt vorzugsweise durch eine reibschlüssige Verbindung. Denkbar ist auch, dass Formschlussmittel zum Einsatz kommen, insbesondere solche, die inkremental kleine unterschiedliche Einstellpositionen ermöglicht.

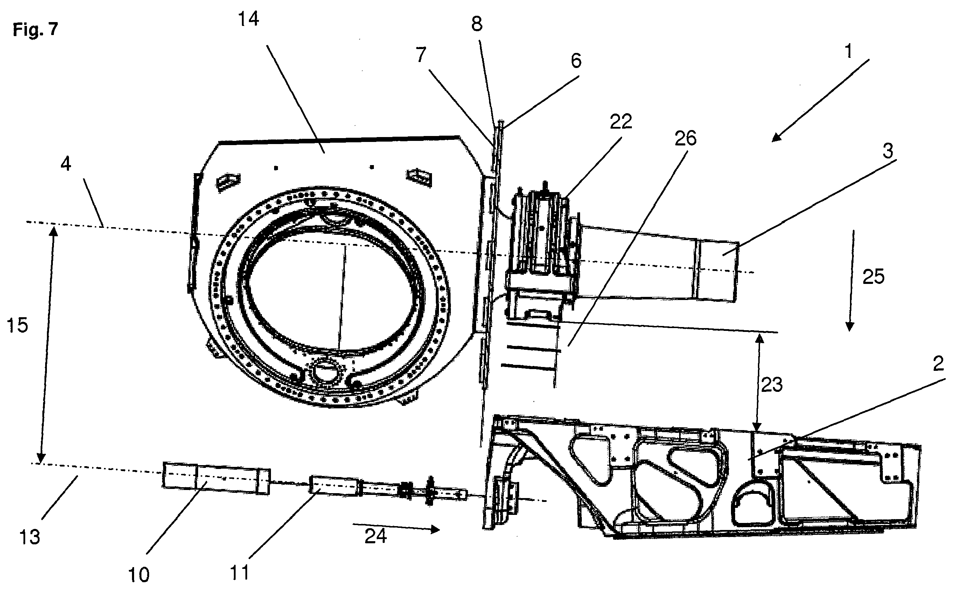

Fig. 7 stellt eine alternative Ausführungsform zur Veränderung des vertikalen Abstands 15 zwischen Längsachse 4 der Rotorwelle 3 und Mittelachse 13 des Arretierungsbolzens 11 dar. Gehäuse 10' und Arretierungsbolzen 11 werden in Richtung des Pfeiles 24 in dafür vorgesehene Aufnahmen im Maschinenträger 2 eingeführt. Das Gehäuse 10' ist dabei ohne Exzentrizität ausgeführt, so dass Mittelachse 17 des Gehäuses 10' und Mittelachse 13 des Arretierungsbolzens 11 aufeinander liegen.

Die Rotorwelle 3 wird in Richtung des Pfeiles 24 auf den Maschinenträger 2 aufgesetzt und über das Lager 22 mit diesem verbunden. Der Abstand 15 zwischen Längsachse 4 der Rotorwelle 3 und der Mittelachse 13 des Arretierungsbolzens 11 wird dadurch bestimmt, dass zwischen dem Lager 22 und dem Maschinenträger 2 ein oder mehrere Distanzelemente 26 eingefügt werden. Die Distanzelemente 26 können dabei unterschiedliche Dicken aufweisen. Die Gesamtdicke der zwischengefügten Distanzelemente 26 bestimmt den Abstand 23 zwischen Maschinenträger 2 und Lagerung 22 der Rotorwelle 3 und dadurch auch den Abstand 15 zwischen der Längsachse 4 der Rotorwelle 3 und der Mittelachse 13 des Arretierungsbolzens 11. Da die Lage der Durchbrechungen 7 in der Arretierungsscheibe 6 gegenüber der Längsachse 4 der Rotorwelle 3 festgelegt ist, wird somit auch die Lage der Durchbrechungen 7 gegenüber dem Arretierungsbolzen 11 bestimmt, so dass Arretierungsbolzen 11 und eine der Durchbrechungen 7 miteinander fluchten. Somit ist der Abstand 15 zumindest bei der Montage der Windturbine 31 einstellbar.

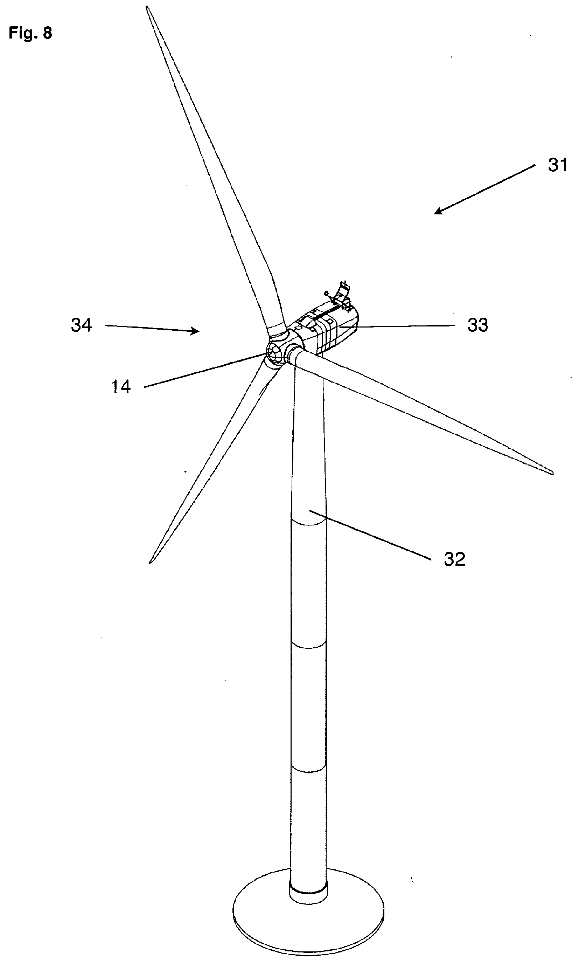

In Figur 8 ist eine Windturbine 31 mit einem Turm 32, mit einem auf den Turm 32 drehbar um eine Turmachse des Turms 32 gelagerten Maschinenhaus 33 und ein über eine Rotorwelle 3 mit einem in dem Maschinenhaus 8 angeordneten Generator verbundener Rotor 34 dargestellt. Bei der Windnachführung - auch als "Gieren" bezeichnet - wird das Maschinenhaus 33 um die Turmachse des Turms 32 in der horizontalen Ebene gedreht, um den Rotor 34 senkrecht in den Wind zu drehen und folglich die Energieausbeute zu maximieren.

Die in den beschriebenen Ausführungsbeispielen offenbarten Merkmalskombinationen sollen nicht limitierend auf die Erfindung wirken, vielmehr sind auch die Merkmale der unterschiedlichen Ausführungen miteinander kombinierbar.

**Bezugszeichenliste**

| | | | |
|---|---|---|---|
| 1 | Arretierungsvorrichtung | 18 | Aufnahme |
| 2 | Maschinenträger | 19 | Verlagerung Arretierungsbolzen / Radialrichtung |
| 3 | Rotorwelle | | |
| 4 | Längsachse Rotorwelle | 20 | Drehung Gehäuse |
| 5 | Drehrichtung Rotorwelle | 21 | Exzentrizität |
| 6 | Arretierungsscheibe | 22 | Lager Rotorwelle |
| 7 | Durchbrechung | 23 | Abstand Lager - Maschinenträger |
| 8 | Buchse | 24 | Einbaurichtung Gehäuse |
| 9 | Kreislinie | 25 | Einbaurichtung Lager/Rotorwelle |
| 10 | Gehäuse | 26 | Distanzelemente |
| 10' | Gehäuse | 27 | Triebstrang |
| 11 | Arretierungsbolzen | 28 | zylindrischen Form |
| 12 | Bewegung Arretierungsbolzen / Axialrichtung | 29 | Umfangsrichtung |
| | | 30 | Aufnahme des Maschinenträgers |
| 13 | Mittelachse Arretierungsbolzen | 31 | Windturbine |
| 14 | Rotornabe | 32 | Turm |
| 15 | Abstand | 33 | Maschinenhaus |
| 16 | Querschnitt Gehäuse | 34 | Rotor |
| 17 | Mittelachse Gehäuse | | |

## Patentansprüche

1. Arretierungsvorrichtung (1) für die formschlüssige Arretierung eines Rotors (34) einer Windturbine (31),
- mit einer drehbar an einem Maschinenträger (2) der Windturbine angebrachten Rotorwelle (3) eines Triebstrangs (27),
- einer Arretierungsscheibe (6) und einem Arretierungsbolzen (11),
- wobei die Rotorwelle (3) drehfest mit der Arretierungsscheibe (6) verbunden ist,
- die eine oder mehrere Durchbrechungen (7) für den Eingriff des Arretierungsbolzens (11) aufweist,
- wobei der Arretierungsbolzen (11) in einer Umfangsrichtung (29) der Rotorwelle (3) am Maschinenträger (2) im Wesentlichen festlegbar ist,
- und im Wesentlichen in einer Axialrichtung (12) der Rotorwelle (3) am Maschinenträger (2) verschiebbar angeordnet ist,
- wobei der Arretierungsbolzen (11) in einem Gehäuse (10; 10') gelagert und im Wesentlichen um seine Mittelachse (13) rotationssymmetrisch, insbesondere zylinderförmig, gestaltet ist,
**dadurch gekennzeichnet, dass**
- das Gehäuse (10) mit einer inneren hohlzylindrischen Aufnahme (18) zur Aufnahme des Arretierungsbolzens (6) sowie mit einer äußeren zylindrischen Form mit einer Mittelachse (17) ausgebildet ist, wobei die Mittelachse (13) der Aufnahme (18) und die Mittelachse (17) der äußeren zylindrischen Form (28) gegeneinander versetzt (21) sind, wodurch der Abstand (15) des Arretierungsbolzens (11) gegenüber der Rotorwelle (3) mindestens in einer Radialrichtung (19) einstellbar ist.

2. Arretierungsvorrichtung (1) nach Anspruch 1, **dadurch gekennzeichnet, dass** das Gehäuse (10) in einer Aufnahme (30) des Maschinenträgers (2) angeordnet ist, wobei die Aufnahme (30) und das Gehäuse (10) derart ausgebildet sind, dass die Rotationsposition des Gehäuses (10) bezüglich seiner Mittelachse (17) in der Aufnahme (30) einstellbar und gegen eine unbeabsichtigte Verdrehung festlegbar ist.

3. Arretierungsvorrichtung (1) nach Anspruch 2, **dadurch gekennzeichnet, dass** die Festlegung des Gehäuses (10) durch eine reibschlüssige Verbindung erfolgt.

4. Windturbine mit einer Arretierungsvorrichtung (1) nach einem der vorangehenden Ansprüche.

## Claims

1. Locking device (1) for the form-closed locking of a rotor (34) of a wind turbine (31),
- with a rotor shaft of a drive train (27) rotatably arranged on the main frame (2) of the wind turbine,
- a locking disc (6) and a locking bolt (11),
- whereas the rotor shaft (3) is rotatably fixed with the locking disc (6),
- which features one or more through holes (7) for the engagement of the locking bolt (11),
- whereas the locking bolt (11) is mainly determined in a circumference direction (29) of the rotor shaft (3) on the main frame (2),
- and in particular slidably disposed in an axial direction (12) of the rotor shaft (3) on the main frame (2),
- whereas the locking bolt (11) is mounted in a housing (10; 10') and designed primarily rotational symmetrically around its central axis (13), in particular cylindrically,
**characterized in that**
- the housing (10) is designed with an inner hollow-cylindrical receptor (18) for receipt of the locking bolt (6) as well as with an outer cylindrical form with the central axis (17), whereas the central axis (13) of the receptor (18) and the central axis (17) of the outer cylindrical form (28) are positioned to one another, whereby the distance (15) of the locking bolt (11) to the rotor shaft (3) is adjustable at least in one radial direction (19).

2. Locking device (1) according to claim 1, **characterized in that** the housing (10) is arranged in a receptor (30) of the main frame (2), whereas the receptor (30) and the housing (10) are designed in a way that the rotation position of the housing (10) is adjustable respective to its central axis (17) in the receptor (30) and locked against an unintentional rotation.

3. Locking device (1) according to claim 2, **characterized in that** the locking of the housing results (10) by means of a frictionally engaged connection.

4. Wind turbine with a locking device (1) according to one of preceding claims.

## Revendications

1. Dispositif de verrouillage (1) pour le verrouillage par forme d'un rotor (34) d'une éolienne (31),
- avec un arbre d'entrainement d'une transmission (27) monté de manière rotative sur le châssis principal (2) de l'éolienne,
- un disque de verrouillage (6) et une cheville de verrouillage (11),
- tandis que l'arbre d'entrainement (3) est fixé de manière rotative avec le disque de verrouillage (6),
- lequel a pour caractéristique un ou plusieurs trous traversant (7) pour l'engagement de la cheville de verrouillage (11),
- tandis que la cheville de verrouillage (11) est principalement définie dans une direction circonférentielle (29) de l'arbre d'entrainement (3) sur le châssis principal (2),
- et en particulier disposé de manière coulissante dans une direction axiale (12) de l'arbre d'entrainement (3) sur le châssis principal (2),
- tandis que la cheville de verrouillage (11) est montée dans un carter (10;10 ') et conçue principalement autour de son axe central propre en rotation symétrique (13), et particulièrement avec un forme cylindrique,
**Caractérisé en ce que**,
- le carter (10) est conçu avec au récepteur cylindrique creux (18) pour recevoir la cheville de verrouillage (6), ainsi qu'avec une forme externe cylindrique avec l'axe central (17), où l'axe central (13) du récepteur (18) et l'axe central (17) de la forme cylindrique externe (28) sont positionnées les l'une par rapport à l'autre, de sorte que la distance (15) de la cheville de verrouillage (11) à l'arbre de transmission (3) est réglable au moins dans une direction radiale (19).

2. Dispositif de verrouillage (1) d'après la revendication 1, **caractérisé en ce que** le carter (10) soit disposé dans un récepteur (30) du châssis principal (2), tandis que le récepteur (30) et le carter (10) sont conçus de manière à ce que la position en rotation du carter (10) soit réglable par rapport à son axe central (17) dans le récepteur (30) et bloqué pour empêcher les rotations involontaires

3. Dispositif de verrouillage (1) d'après la revendication 1, caractérisé en que le verrouillage du carter (10) soit fait au moyen d'une connexion par friction.

4. Eolienne avec un dispositif de verrouillage (1) selon l'une quelconque des revendications précédente.
